# EUROPÄISCHE PATENTSCHRIFT

(11) **EP 2 304 877 B1**
(45) Veröffentlichungstag und Bekanntmachung des Hinweises auf die Patenterteilung: **30.11.2011**
(21) Anmeldenummer: 09776131.6
(22) Anmeldetag: 10.07.2009
(51) Int. Cl.: H04B 1/38

(54) **FUNKSENDESIGNAL-DETEKTIONSSCHALTUNG**
RADIO TRANSMISSION SIGNAL DETECTION CIRCUIT
CIRCUIT DE DÉTECTION DE SIGNAL D ÉMISSION RADIO

(30) Priorität: 14.07.2008 DE 102008040395
(43) Veröffentlichungstag der Anmeldung: 06.04.2011
(73) Patentinhaber: Funkwerk Dabendorf GmbH, 15806 Dabendorf (DE)
(72) Erfinder: NAST, Helmut, 12557 Berlin (DE)
(74) Vertreter: Patentanwälte Bressel und Partner
(86) Internationale Anmeldenummer: PCT/DE2009/050036
(87) Internationale Veröffentlichungsnummer: WO 2010/006596

(56) Entgegenhaltungen:
- EP-A- 0 594 153
- EP-A- 1 841 083
- DE-A1- 19 536 640
- US-A1- 2003 100 351
- US-B1- 6 175 748
- US-B1- 6 230 031

## Beschreibung

Die Erfindung betrifft eine Detektionsschaltung, nämlich eine Schaltungsanordnung mit einer Detektoreinheit zur Detektion des Sendesignals eines Mobilfunkendgeräts, welche für den Einsatz als Bestandteil einer Schaltungsanordnung vorgesehen ist, die der Verarbeitung oder der Beeinflussung von an dem Mobilfunkendgerät eingehenden Empfangssignalen und von dem Mobilfunkendgerät ausgehenden Sendesignalen dient und bei welcher dazu, veranlasst durch die Detektionsschaltung, die Empfangssignale einerseits und die Sendesignale andererseits über unterschiedliche Schaltungszweige und/oder unterschiedliche Einheiten geführt werden.

Im Zusammenhang mit dem Einsatz von Freisprecheinrichtungen, insbesondere zum Betreiben von Mobilfunkendgeräten in einem Kraftfahrzeug, sind Schaltungsanordnungen bekannt geworden und im Einsatz, welche die zwischen einer externen Antenne und dem mit der Freisprecheinrichtung betriebenen Mobilfunkendgerät auftretende Dämpfung kompensieren. Die Kompensation der Dämpfung, welcher sowohl empfangene Mobilfunksignale auf ihrem Weg von der externen Antenne zum Mobilfunkendgerät als auch vom Mobilfunkendgerät ausgehende Sendesignale auf ihrem Weg zur externen Antenne unterworfen sind, erfolgt bezüglich der Empfangssignale mittels entsprechender, teilweise eher breitbandiger Empfangsverstärker und bezüglich der Sendesignale mittels bandbegrenzter Leistungsverstärker. Dabei ist es bekannt, die Verstärkung zur Kompensation der auftretenden Dämpfung dynamisch einzustellen beziehungsweise zu regeln, um sie jeweils an die beim Betrieb der Schaltung bezüglich der Dämpfung tatsächlich bestehenden Verhältnisse anzupassen. Eine Schaltungsanordnung mit einer dynamischen Kontrolle der die Dämpfung kompensierenden Verstärkung wird beispielsweise durch die US 2003/0100351 A1 offenbart. Die in der Druckschrift beschriebene Schaltungsanordnung dient insbesondere der dynamischen Einstellung der Dämpfungskompensation der Sendesignale. Hierzu sind in einem Sendezweig der Schaltung vor und hinter dem beziehungsweise den der Verstärkung des Sendesignals eines Mobiltelefons dienenden Verstärkern Detektoren angeordnet, mit denen jeweils der Pegel eines mittels Richtungskopplern aus dem Sendezweig ausgekoppelten Anteils des Sendesignals ermittelt wird. Durch eine spezielle Schaltungseinheit zur Verstärkungskontrolle werden die mittels der Detektoren jeweils ermittelten Pegel des Sendesignals ausgewertet und die Verstärker des Sendezweigs entsprechend angesteuert, wobei mit Hilfe des nach der Verstärkung ausgekoppelten Teils der Sendeleistung die Verstärkung im Leistungszweig auf einen maximalen Wert begrenzt wird. Eine vergleichbare Schaltungsanordnung wird durch die US 6,175,748 B1 beschrieben.

Zur Verringerung der Beeinflussung von Sende- und Empfangskanal ist es außerdem bekannt, in Schaltungsanordnungen, welche der Kompensation der Dämpfung dienen, die Signalpfade jeweils so umzuschalten, dass Empfangssignale dem entsprechenden zu ihrer Verstärkung vorgesehenen Empfangsverstärker und vom Mobilfunkendgerät ausgehende Sendesignale einem jeweiligen Sendeleistungsverstärker zugeführt werden. Um dies zu gewährleisten, umfassen daher entsprechende Schaltungsanordnungen zur Dämpfungskompensation Detektionsschaltungen, welche das Sendesignal eines mit der Schaltungsanordnung betriebenen Mobilfunkendgeräts detektieren und Steuersignale bereitstellen, durch welche entsprechende Schaltmittel in Abhängigkeit des Vorhandenseins eines Sendesignals oder des Fehlens eines Sendesignals dazu veranlasst werden, die Signalpfade der Schaltungsanordnung so umzuschalten, dass die die Schaltungsanordnung passierenden Signale jeweils über den richtigen Schaltungszweig geführt werden.

Bei den Schaltungsanordnungen des Standes der Technik sind die genannten Detektionsschaltungen unmittelbar geräteseitig, das heißt unmittelbar an einem zur Verbindung mit dem Mobilfunkendgerät vorgesehenen Anschluss der Schaltungsanordnung zur Dämpfungskompensation angeordnet. Sie umfassen dabei mindestens einen Leitungskoppler beziehungsweise HF-Koppler, welcher für Empfangssignale passierbar, das heißt transparent ist, aber einen Teil eines von dem Mobilfunkendgerät ausgehenden Sendesignals auskoppelt und einer Detektoreinheit zuführt. Bei der Detektoreinheit handelt es sich beispielsweise um einen Schwellwertschalter, welcher im Falle des Vorhandenseins eines oberhalb des Schwellwerts liegenden Signals die zum Umschalten der Signalpfade für den Sendebetrieb erforderlichen Steuersignale liefert.

Gattungsgemäße Schaltungsanordnungen zur Kompensation der zwischen einer externen Antenne und einem an der externen Antenne betriebenen Mobilfunkendgerät auftretenden Dämpfung werden beispielsweise durch die DE 195 36 640 A1 und die DE 10 2006 010 963 A1 offenbart. Hierbei betrifft die DE 195 36 640 A1 eine entsprechende Schaltungsanordnung für den Betrieb innerhalb eines Mobilfunkbandes, insbesondere im GSM-Netz oder in einem DCS-Netz, während sich die DE 10 2006 010 963 A1 und EP 1 841 083 A1 auf eine mehrbandfähige Schaltungsanordnung beziehen. Nach beiden Lösungen wird das Auftreten eines Sendesignals eines mit der Schaltungsanordnung betriebenen Mobilfunkgerätes ausgehend von einem Anteil des dem Sendezweig der Schaltung zuzuführenden Signals detektiert, welcher mittels eines HF-Kopplers beziehungsweise eines Leitungskopplers am geräteseitigen Eingang der Schaltung ausgekoppelt wird. Insbesondere bei Schaltungsanordnungen der gattungsgemäßen Art, welche wie die nach der DE 10 2006 010 963 A1 und der EP 1 841 083 A1auch zum Betrieb mit nach dem UMTS-Standard arbeitenden Mobilfunkendgeräten ausgebildet sind, hat es sich aber gezeigt, dass aufgrund der beim UMTS-Standard vergleichsweise geringen Sendeleistung ein Sendesignal nicht immer zuverlässig erkannt wird. Dies rührt daher, dass durch den bereits erwähnten HF-Koppler nur ein Teil der Sendeleistung des von dem Mobilfunkendgerät ausgehenden Sendesignals zum Zwecke der Detektion ausgekoppelt wird, da natürlich ein möglichst großer Anteil der Sendeleistung als Nutzsignal über einen der für die Aussendung von Signalen vorgesehenen Schaltungszweige geführt werden soll. Sofern darüber hinaus im Bereich der Ankopplung des Mobilfunkendgeräts an die entsprechende Schaltungsanordnung Dämpfungsverluste auftreten, kann im Einzelfalle der Pegel des Anteils eines Sendesignals, welcher der Detektoreinheit, das heißt dem Schwellwertschalter, zugeführt wird, so gering sein, dass dieser unterhalb des eingestellten Schwellwerts liegt und somit das Signal nicht mehr als Sendesignal erkannt wird.

In zunehmendem Maße erfolgt zudem die Verbindung von Mobilfunkendgeräten mit den bei ihrem Betrieb genutzten Zubehörschaltungen nicht mehr durch eine galvanische Verbindung, sondern im Wege einer elektromagnetischen Kopplung, da bei modernen Mobilfunkendgeräten häufig kein galvanischer Anschluss für das HF-Antennensignal vorgesehen ist. Hierdurch kann im Einzelfalle bei besonders schlechten Koppelverhältnissen zwischen der Schaltungsanordnung zur Dämpfungskompensation und dem Mobilfunkendgerät auch beim Betrieb von nach dem GSM-Standard und damit mit einer höheren Sendeleistung arbeitenden Mobilfunkendgeräten der im Sendebetrieb des Mobilfunkgeräts an der Detektoreinheit anstehende Pegel unterhalb des Schwellwerts liegen, so dass Sendesignale des Mobilfunkgeräts nicht zuverlässig erkannt werden. Aufgabe der Erfindung ist es daher, eine Schaltungsanordnung zur Detektion eines Sendesignals bereitzustellen, welche Bestandteil einer Schaltungsanordnung zur Verarbeitung oder der Beeinflussung von an Mobilfunkendgeräten eingehenden Empfangssignalen und von diesen Geräten ausgehenden Sendesignalen, beispielsweise Bestandteil einer Schaltungsanordnung zur Dämpfungskompensation ist, so auszubilden, dass die Selektivität und die Zuverlässigkeit der Detektion eines von dem Mobilfunkendgerät ausgehenden Sendesignals erhöht wird.

Die Aufgabe wird durch eine Detektionsschaltung mit den Merkmalen des Hauptanspruchs gelöst. Vorteilhafte Aus- beziehungsweise Weiterbildungen der Erfindung sind durch die Unteransprüche gegeben.

Die zur Lösung der Aufgabe vorgeschlagene Schaltungsanordnung weist eine Detektoreinheit zur Detektion eines Sendesignals auf und ist entsprechend der Aufgabe als Teil einer komplexeren Schaltungsanordnung ausgebildet, welche der Verarbeitung oder Beeinflussung von Mobilfunksignalen dient, die einem mit ihr betriebenen Mobilfunkendgerät zugeführt oder durch das betreffende Mobilfunkendgerät ausgesendet werden. Im Hinblick darauf, dass es sich bei jeder elektronischen Schaltung um eine spezielle Anordnung von Bauelementen und elektronischen Funktionseinheiten und somit um eine Schaltungsanordnung handelt, soll im weiteren vereinfachend für die erfindungsgemäße Schaltungsanordnung die Kurzform "Detektionsschaltung" verwendet werden. Dabei bezieht sich der Begriff "Detektionsschaltung° sowohl auf die, durch die Zusammenschaltung der die betreffende Schaltungsanordnung ausbildenden Bauelemente und Funktionseinheiten bestimmte Beschaffenheit der Schaltungsanordnung, als auch auf ihre Anordnung innerhalb der komplexeren Schaltungsanordnung zur Verarbeitung oder Beeinflussung von Empfangs- und Sendesignalen eines Mobilfunkendgeräts. Zur Unterscheidung von der Detektionsschaltung und ebenfalls verkürzend soll die letztgenannte Schaltungsanordnung im Weiteren mit "Zubehörschaltung" bezeichnet werden. Bei ihr handelt es sich beispielsweise um eine Schaltungsanordnung zur Dämpfungskompensation, wobei jedoch die Erfindung nicht auf eine als Bestandteil derartiger Schaltungsanordnungen ausgebildete Detektionsschaltung beschränkt ist.

Veranlasst durch die Detektionsschaltung beziehungsweise deren Detektoreinheit wird die bereits angesprochene Zubehörschaltung in unterschiedliche Betriebszustände geschaltet. Dies geschieht vorzugsweise durch die Betätigung in der Zubehörschaltung angeordneter Schaltmittel und/oder durch das Ein- und Ausschalten einzelner Funktionsgruppen. Entsprechend einem dieser Betriebszustände wird im Falle der Detektion eines Sendesignals des mit der Zubehörschaltung betriebenen Mobilfunkendgeräts ein Schaltungsteil der Zubehörschaltung aktiv geschaltet, in welchem das Sendesignal über mindestens einen seiner Verstärkung dienenden, aktiv geschalteten Sendeleistungsverstärker geführt wird. In Abwesenheit eines Sendesignals ist hingegen der vorgenannte Sendeleistungsverstärker inaktiv geschaltet ist. Dabei wird der Sendeleistungsverstärker durch die Einbeziehung des Schaltungszweiges, in welchem er angeordnet ist, in die Signalwege und/oder durch das Einschalten des Sendeleistungsverstärkers für HF-Signale aktiv und entsprechend umgekehrt, durch das Auftrennen einer Verbindung in diesem Schaltungszweig und/oder das Ausschalten des Sendeleistungsverstärkers für HF-Signale, inaktiv geschaltet.

Zur Verbesserung der Selektivität und der Zuverlässigkeit der Detektion des Sendesignals ist die Detektionsschaltung erfindungsgemäß über ein, in einem Sendezweig vor dem mindestens einen bei der Detektion eines Sendesignals aktiv zu schaltenden Sendeleistungsverstärker angeordnetes Schaltmittel in die Zubehörschaltung einbezogen. Darüber hinaus ist sie erfindungsgemäß über ein aus Sicht des Mobilfunkendgeräts hinter dem betreffenden Sendeleistungsverstärker angeordnetes Koppelglied an den vorgenannten Sendezweig der Zubehörschaltung angekoppelt. Ausbildung und Anordnung der Detektionsschaltung sind derart, dass das Sendesignal zu Beginn des Sendeburst aufgrund eines entsprechenden Schaltzustands des von der Detektoreinheit betätigten und sie in die Zubehörschaltung einbeziehenden Schaltmittels zunächst nicht dem Sendeleistungsverstärker, sondern über das betreffende Schaltmittel der Detektoreinheit zugeführt wird. Erst mit der Detektion des Sendesignals durch die Detektoreinheit wird das vorgenannte Schaltmittel durch die Detektoreinheit umgeschaltet und dann das Sendesignal dem Sendeleistungsverstärker zugeführt. Damit die Zubehörschaltung diesen Betriebszustand für die Dauer des Sendeburst beibehält, obwohl das Sendesignal nun nicht mehr über das vor dem Sendeleistungsverstärker angeordnete Schaltmittel der Detektoreinheit zugeführt wird, ist die Detektionsschaltung so ausgebildet, dass sie eine Selbsthaltefunktion aufweist. Ferner ist die Einbindung der Detektionsschaltung in die Zubehörschaltung derart, dass sie, wie bereits ausgeführt, hinter dem bei der Detektion des Sendesignals aktiv zu schaltenden Sendeleistungsverstärker über ein Koppelglied angekoppelt ist und dabei, vorzugsweise mittels eines Leitungskopplers, ein Teil der am Ausgang des Sendeleistungsverstärkers anstehenden Ausgangsleistung des Sendesignals der Detektoreinheit zugeführt wird. Hierdurch ist gewährleistet, dass die Detektionsschaltung, nachdem sie sich zunächst selbst hält, in der Folge weiterhin das Vorhandensein eines Sendesignals erkennt. Dabei ist der über den dem Sendeleistungsverstärker nachgeschalteten Leitungskoppler ausgekoppelte Anteil der Sendeleistung aufgrund der zuvor erfolgten Verstärkung groß genug, um von der Detektoreinheit, welcher er zugeführt wird, sicher als Sendesignal erkannt zu werden.

Sofern im weiteren zeitlichen Verlauf von dem Mobilfunkendgerät kein Sendesignal mehr ausgesendet wird und die Detektoreinheit folglich kein Sendesignal mehr detektiert, werden das vor dem Sendeleistungsverstärker angeordnete Schaltmittel und gegebenenfalls weitere in der Zubehörschaltung angeordnete Schaltmittel von der Detektoreinheit wieder in einen anderen, Schaltzustand umgeschaltet, in dem die Zubehörschaltung wieder ihren ursprünglichen Betriebszustand einnimmt und damit der Sendeleistungsverstärker inaktiv geschaltet ist.

Erfindungsgemäß wird demnach die Zuverlässigkeit des Erkennens eines von dem Mobilfunkendgerät ausgehenden Sendesignals dadurch verbessert, dass der Detektoreinheit nicht, wie nach dem Stand der Technik, nur ein Bruchteil des zunächst noch unverstärkten Sendesignals zugeführt wird, sondern dass zu Beginn des Sendeburst zunächst gleichsam die gesamte Sendeleistung des Mobilfunkendgeräts an der Detektoreinheit ansteht und für den Detektionsprozess genutzt wird und dass danach ein Anteil des durch den Sendeleistungsverstärker verstärkten Sendesignals der Detektoreinheit zugeführt wird, welcher aufgrund der zuvor erfolgten Verstärkung einen bedeutend höheren Pegel aufweist, als der gemäß dem Stand der Technik aus dem unverstärkten Sendesignal ausgekoppelte Anteil.

Bei einer besonders vorteilhaften Ausgestaltung der erfindungsgemäßen Detektionsschaltung ist zwischen dem dem Ausgang des Sendeleistungsverstärkers nachgeschalteten Koppelglied und der Detektoreinheit ein weiteres Schaltmittel angeordnet, welches durch die Detektoreinheit in der Weise betätigt wird, dass nur bei Anwesenheit eines von der Detektionsschaltung detektierten Sendesignals des mit der Zubehörschaltung betriebenen Mobilfunkendgeräts eine galvanische Verbindung zwischen dem Koppelglied und der Detektoreinheit besteht. Hierdurch wird die Zuverlässigkeit der Detektion weiter erhöht.

Gemäß einer insbesondere für Zubehörschaltungen zum Betrieb mit im Duplex-Modus arbeitenden Mobilfunkendgeräten vorgesehenen Ausbildungsform ist die Detektionsschaltung geräteseitig, das heißt im Bereich des Ausgangs des Mobilfunkendgeräts, zwischen einem die Sende- und Empfangssignale trennenden Duplexer und dem durch die Detektionsschaltung beim Auftreten eines Sendesignals aktiv zu schaltenden Sendeleistungsverstärker über ein entsprechendes, von ihr betätigtes Schaltmittel in die betreffende Zubehörschaltung eingefügt.

Die Selbsthaltung der Detektionsschaltung kann durch unterschiedliche Maßnahmen erreicht werden. Gemäß einer möglichen Ausbildungsform weist die Detektionsschaltung ein Zeitglied (beispielsweise einen sich erst allmählich entladender Kondensator oder eine Verzögerungsleitung) auf, durch welches der zu Beginn des Sendeburst von der Zubehörschaltung eingenommene Betriebszustand in jedem Falle für eine vorgegebene Zeitdauer aufrechterhalten wird. Dabei muss die entsprechende Zeitdauer am Zeitglied selbstverständlich so eingestellt werden, dass der Sendeleistungsverstärker in der Zwischenzeit sicher durchgeschaltet hat und am Eingang der Detektoreinheit das im Bereich des Ausgangs des Sendeleistungsverstärkers ausgekoppelte Sendesignal ansteht. Das Zeitglied kann gegebenenfalls ein unmittelbarer integraler Bestandteil der Detektoreinheit sein.

Gemäß einer besonders vorteilhaften Weiterbildung der Detektionsschaltung ist deren Detektoreinheit als ein Feldstärkemesser mit Schwellwertfunktion ausgebildet. Bei dieser Ausbildungsform wird der Grundzustand der Zubehörschaltung, bei welchem der Sendeleistungsverstärker inaktiv geschaltet und die Detektoreinheit über das vor dem Sendeleistungsverstärker angeordnete Schaltmittel und gegebenenfalls über den vorhandenen Duplexer mit dem Ausgang des Mobilfunkendgeräts verbunden ist, wieder eingenommen, sobald der ausgangsseitig des Sendeleistungsverstärkers ausgekoppelte Anteil des Sendesignals einen vorgegebenen Pegel unterschreitet. Als zweckmäßig hat sich dabei eine Auslegung erwiesen, bei der die Detektionsschaltung eine Hysterese von etwa 3 dB aufweist. Das heißt, sobald der ausgangsseitig des Sendeleistungsverstärkers ausgekoppelte Anteil des Sendesignals mehr als 3 dB unterhalb des Pegels des zu Beginn des Sendeburst über das vor dem Sendeleistungsverstärker angeordnete Schaltmittel der Detektoreinheit zugeführten Sendesignals liegt, wird der Sendeleistungsverstärker durch die Detektoreinheit wieder inaktiv geschaltet.

Anhand von Ausführungsbeispielen sollen nachfolgend nochmals Details der Erfindung verdeutlicht werden. In den zugehörigen Zeichnungen zeigen:
- Fig. 1:: den Ausschnitt einer möglichen Ausführung der erfindungsgemäßen Detektionsschaltung,
- Fig. 2:: eine weitere Ausbildungsform der Erfindung,
- Fig. 3: eine gattungsgemäße Detektionsschaltung nach dem Stand der Technik.

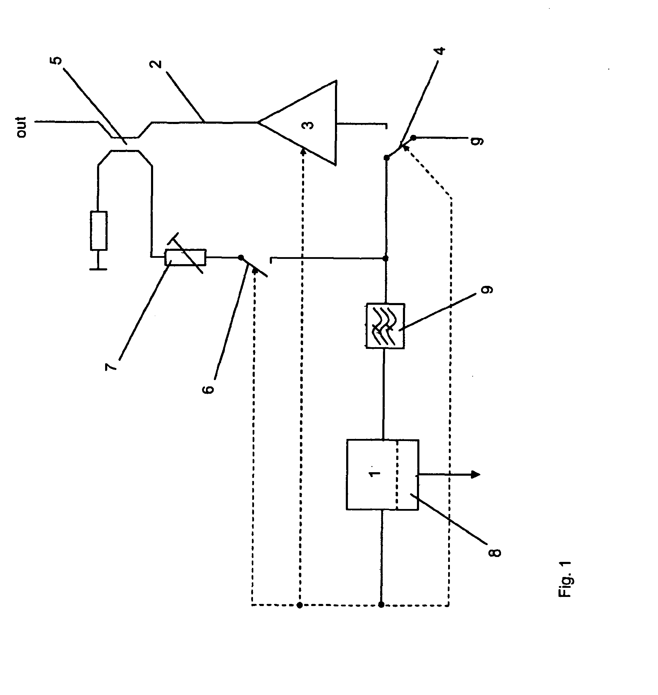

Die Fig. 1 zeigt den Ausschnitt einer möglichen Ausbildungsform der erfindungsgemäßen Detektionsschaltung und deren Einordnung in den Sendezweig 2 einer Schaltungsanordnung (Zubehörschaltung), mit welcher ein Mobilfunkendgerät zur Nutzung einer externen Antenne und zur Kompensation der dabei in den Signalwegen zwischen der externen Antenne und dem Mobilfunkendgerät auftretenden Dämpfung zu betreiben ist. In der Figur ist dabei nur ein Teil eines Sendezweiges 2 einer derartigen Zubehörschaltung mit einem darin angeordneten Sendeleistungsverstärker 3 dargestellt. Das Konzept dieser Zubehörschaltung erfordert es, in Abhängigkeit des Vorhandenseins eines Sendesignals des mit ihr betriebenen (nicht gezeigten) Mobilfunkendgeräts, unterschiedliche Schaltungsteile, das heißt Empfangs- und Sendezweige der Zubehörschaltung, aktiv oder inaktiv zu schalten. Insoweit ist es erforderlich, ein von dem Mobilfunkendgerät, das heißt ein geräteseitig g ausgehendes Sendesignal zu detektieren.

Mittels der, wie gesagt einen Teil einer solchen Zubehörschaltung ausbildenden Detektionsschaltung werden gemäß dem in der Fig. 1 gezeigten Beispiel die Schaltmittel 4, 6 gesteuert beziehungsweise betätigt und der Sendeleistungsverstärker 3 in Anwesenheit eines Sendesignals zugeschaltet beziehungsweise aktiv geschaltet, sowie in Abwesenheit eines Sendesignals abgeschaltet, das heißt bezüglich der Verstärkung von HF-Signalen außer Betrieb genommen wird. Dabei stellt die Fig. 1 insoweit nur einen Ausschnitt einer möglichen Ausbildungsform der erfindungsgemäßen Detektionsschaltung dar, als dass gegebenenfalls weitere in der Darstellung nicht gezeigte Schaltmittel der Zubehörschaltung durch die Detektoreinheit 1 Detektoreinheit der Detektionsschaltung betätigt werden. Folglich sind auch gegebenenfalls weitere von der Detektoreinheit 1 ausgehende Steuer- beziehungsweise Wirkverbindungen, wie sie bezüglich des Sendeleistungsverstärkers 3 und der Schaltmittel 4, 6 als gestrichelte Linien dargestellt sind, in der Figur nicht gezeigt.

In erfindungswesentlicher Weise ist die Detektionsschaltung mit der Detektoreinheit 1, bezogen auf das geräteseitig g anzuschließende (nicht gezeigte) Mobilfunkgerät, vor dem Sendeleistungsverstärker 3 über ein Schaltmittel 4 eingefügt und nach dem Sendeleistungsverstärker 3 über ein Koppelglied 5 an den Sendezweig 2 der Zubehörschaltung angekoppelt. Dabei wird das Schaltmittel 4 - ein HF-Schalter, welcher in der figur nur symbolisch durch das Symbol eines galvanischen Schalters dargestellt ist-durch die Detektoreinheit 3 gesteuert. Im Empfangszustand beziehungsweise Grundzustand der mit der erfindungsgemäßen Detektionsschaltung ausgestatteten Zubehörschaltung nimmt dieses Schaltmittel 4 den in der Fig. 1 dargestellten Schaltzustand ein. Hierbei ist das geräteseitig g angeschlossene Mobilfunkendgerät über das Schaltmittel 4 und ein Filter 9 unmittelbar mit der Detektoreinheit 1 verbunden. Beim Aussenden eines Sendesignals durch das Mobilfunkendgerät gelangt das Sendesignal aufgrund dieses Schaltzustands des Schaltmittels 4 zu Beginn des Sendeburst unmittelbar auf den Eingang der Detektoreinheit 1. Durch die Detektoreinheit 1 wird das Vorhandensein des Sendesignals detektiert. Sie betätigt hierauf die Schaltmittel 4, 6 (und gegebenenfalls weitere nicht dargestellte Schaltmittel der Zubehörschaltung) zur Einnahme eines Sendebetriebsmodus beziehungsweise -zustands. Über die Schaltmittel 4, 6 werden nach deren Betätigung zum einen das Sendesignal des Mobilfunkendgeräts dem Sendeleistungsverstärker 3 zugeführt und zum anderen das Koppelglied 5 über das Filter 9 galvanisch mit der Detektoreinheit 1 verbunden. Gleichzeitig wird mit der Detektion des Sendesignals über eine in der Figur durch eine gestrichelte Linie angedeutete Steuerleitung der Sendeleistungsverstärker 3 aktiv, das heißt zur Verstärkung von HF-Signalen eingeschaltet. Damit die Detektoreinheit 1 die mit der Umschaltung des Schaltmittels 4 verbundene kurzzeitige Trennung von dem durch das Mobilfunkendgerät ausgesendeten Sendesignal nicht als Beendigung des Sendevorgangs interpretiert, ist die Detektionsschaltung mit einer, beispielsweise wie in der Zeichnung angedeutet, durch eine entsprechende Funktionseinheit 8 innerhalb der Detektoreinheit 1 realisierten Selbsthaltefunktion ausgestattet. Hierbei handelt es sich um ein Zeitglied beziehungsweise Verzögerungsglied, durch welches die Detektionsschaltung beziehungsweise ihre Detektoreinheit 1 für eine sehr kurze Zeitspanne ihre der Anwesenheit eines Sendesignals entsprechenden Steuersignale ausgangsseitig auch dann beibehält, wenn innerhalb dieser kurzen Zeitspanne aufgrund des Umschaltens des Schaltmittels 4 kein Sendesignal an der Detektoreinheit 1 anliegt. Unmittelbar nach dem Umschalten des Schaltmittels 4 und der Inbetriebnahme des Sendeleistungsverstärkers 3 steuert dieser durch, so dass ausgangsseitig des Sendeleistungsverstärkers 3 die verstärkte Sendeleistung anliegt, von welcher ein Teil über den Leitungskoppler 5 ausgekoppelt und über das Schaltmittel 6 und das Filter 9 auf den Eingang der Detektoreinheit 1 geführt wird.

Mittels des Stellglieds 7, eines einstellbaren Dämpfungsglieds, wird für die Detektionsschaltung eine Hysterese derart eingestellt, dass die von der Detektoreinheit 1 betätigten Schaltmittel 4, 6 wieder den dem Empfangsmodus entsprechenden Schaltzustand einnehmen, sobald der Signalpegel an der Detektoreinheit 1 mehr als 3 dB unterhalb des Pegels des zu Beginn des Sendeburst detektierten Sendesignals liegt. Die gesamte Schaltungsanordnung wird dann in den Empfangsmodus geschaltet und dabei auch der Sendeleistungsverstärker 3 durch die Detektoreinheit 1 abgeschaltet. Dadurch, dass zu Beginn des Sendeburst nicht wie bei den bisher bekannten Lösungen nur ein Teil der noch unverstärkten Sendeleistung ausgekoppelt und der Detektoreinheit 1 zugeführt wird, sondern an dieser mit Beginn des Sendeburst nahezu die gesamte Ausgangsleistung des mit der Schaltungsanordnung betriebenen Mobilfunkendgeräts anliegt, ist die Selektivität und Zuverlässigkeit der Detektion des Sendesignals beim Einsatz der erfindungsgemäßen Detektionsschaltung deutlich verbessert.

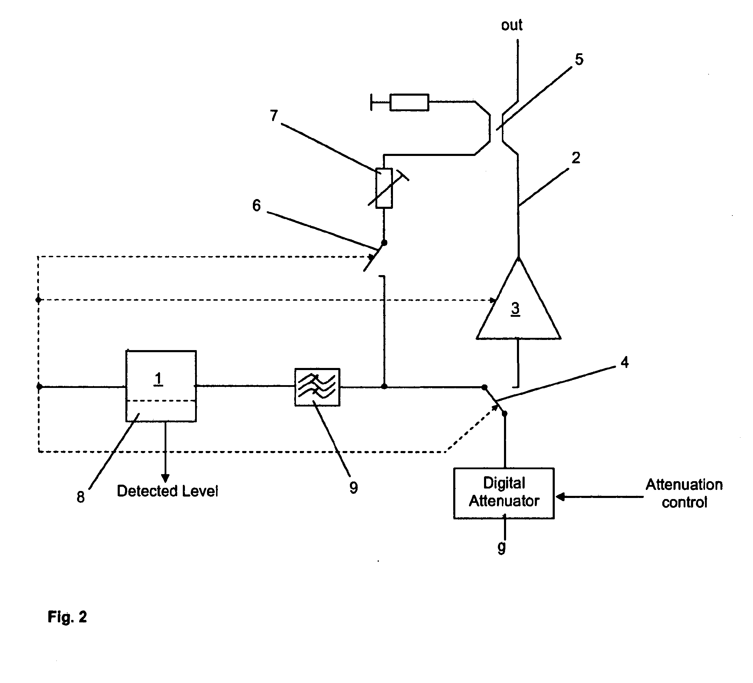

Die Fig. 2 zeigt eine grundsätzlich in gleicher Weise arbeitende Ausbildungsform der Erfindung, bei welcher die Detektoreinheit 1 zusätzlich als Feldstärkemesser ausgebildet ist. Auch hier liegt mit dem Beginn eines Sendeburst zunächst nahezu die gesamte von dem Mobilfunkendgerät ausgesendete Sendeleistung über das Schaltmittel 4 an der Detektoreinheit 1 an. Aufgrund der mittels der Funktionseinheit 8 realisierten Selbsthaltefunktion der Detektionsschaltung werden der, gesteuert durch das Ausgangssignal der Detektoreinheit 1 eingenommene Schaltzustand der Schaltmittel 4, 6 und der Betriebszustand des Sendeleistungsverstärkers 3 beziehungsweise der Betriebszustand der gesamten Zubehörschaltung, in jedem Falle so lange beibehalten, bis ein Teil des detektierten und nach dem Umschalten des Schaltmittels 4 durch den Sendeleistungsverstärker 3 verstärkten Sendesignals über das Koppelglied 5, das Dämpfungsglied 7 und das Schaltmittel 6 am Eingang der Detektoreinheit 1 anliegt. Der Unterschied zur Ausbildungsform gemäß Fig. 1 besteht lediglich darin, dass die Detektoreinheit 1 als ein Feldstärkemesser ausgebildet ist, so dass diese nicht nur die Anwesenheit eines Sendesignals detektiert, sondern auch dessen Pegel ermittelt und den Sendeleistungsverstärker 3 beziehungsweise dessen Verstärkung pegelabhängig steuert.

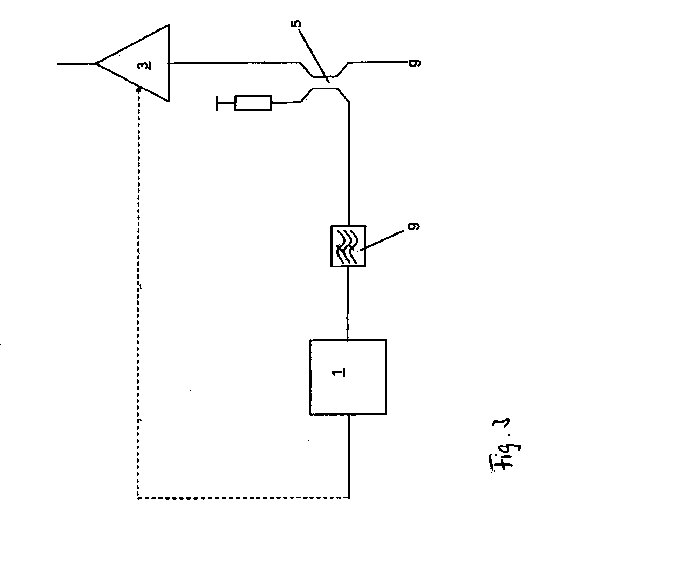

Die Fig. 3 zeigt den Ausschnitt einer Detektionsschaltung nach dem Stand der Technik. Wie zu erkennen ist, wird hier ein Teil der Sendeleistung eines geräteseitig g angeschlossenen (nicht dargestellten) Mobilfunkgeräts vor dem Sendeleistungsverstärker 3 mittels eines Leitungskopplers 5 ausgekoppelt. Da hier das Sendesignal noch unverstärkt ist, kann bei schlechten Koppelbedingungen der Pegel des ausgekoppelten Teils des Sendesignals unter Umständen so gering sein, dass er unterhalb des Schwellwerts der Detektoreinheit liegt und somit das Sendesignal des Mobilfunkgeräts von der Detektoreinheit 1 nicht als solches erkannt wird.

### Liste der Bezugszeichen

- 1: Detektoreinheit
- 2: Sendezweig
- 3: Sendeleistungsverstärker
- 4: Schaltmittel
- 5: Koppelglied, Leitungskoppler
- 6: Schaltmittel
- 7: Stellglied, einstellbares Dämpfungsglied
- 8: Funktionseinheit für Selbsthaltefunktion
- 9: Filter

## Patentansprüche

1. Detektionsschaltung, nämlich Schaltungsanordnung mit einer Detektoreinheit (1) zur Detektion eines Sendesignals eines Mobilfunkendgeräts, welches mit einer Zubehörschaltung, nämlich einer Schaltungsanordnung zur Verarbeitung oder Beeinflussung von dem Mobilfunkendgerät empfangener oder ausgesendeter Mobilfunksignale betrieben wird, wobei die Detektionsschaltung als Teil der vorgenannten Zubehörschaltung ausgebildet ist und wobei die Zubehörschaltung veranlasst durch die Detektoreinheit (1) der Detektionsschaltung unterschiedliche Betriebszustände einnimmt, indem durch die Detektoreinheit (1) im Falle der Detektion eines Sendesignals des Mobilfunkendgeräts ein Schaltungsteil dieser Zubehörschaltung aktiv geschaltet wird, in welchem mindestens ein der Verstärkung des Sendesignals dienender, in Abwesenheit eines Sendesignals des Mobilfunkendgeräts inaktiv geschalteter Sendeleistungsverstärker (3) angeordnet ist, **dadurch gekennzeichnet, dass** die Detektoreinheit (1) der Detektionsschaltung über ein in einem Sendezweig (2) der Zubehörschaltung, vor dem mindestens einen bei der Detektion eines Sendesignals des Mobilfunkendgeräts aktiv zu schaltenden Sendeleistungsverstärker (3) angeordnetes und von der Detektoreinheit (1) betätigtes Schaltmittel (4) sowie über ein dem Sendeleistungsverstärker (3) nachgeschaltetes Koppelglied (5) so in die Zubehörschaltung einbezogen ist, dass ein von dem Mobilfunkendgerät ausgesendetes Sendesignal zu Beginn des Sendeburst zunächst nicht am Sendeleistungsverstärker (3), sondern über das Schaltmittel (4) an der Detektoreinheit (1) anliegt, wobei jedoch die Detektoreinheit (1) das von ihr detektierte Sendesignal durch Betätigung des Schaltmittels (4) unmittelbar auf den Sendeleistungsverstärker (3) umschaltet und dass die Detektionsschaltung eine Selbsthaltefunktion aufweist, so dass die Detektoreinheit (1) die Zubehörschaltung in ihrem für die Anwesenheit eines Sendesignals vorgesehenen Betriebszustand auch nach dem Umschalten des Schaltmittels (4) zumindest solange belässt, bis der Sendeleistungsverstärker (3) durchgeschaltet hat und der mittels des ihm nachgeschalteten Koppelglieds ausgekoppelte Anteil des verstärkten Sendesignals an der Detektoreinheit (1) anliegt.

2. Detektionsschaltung nach Anspruch 1, **dadurch gekennzeichnet, dass** zwischen dem Koppelglied (5) und der Detektoreinheit (1) ein weiteres Schaltmittel (6) angeordnet ist, welches durch die Detektoreinheit (1) in der Weise betätigt wird, dass nur bei Anwesenheit eines von der Detektionsschaltung detektierten Sendesignals des mit der Zubehörschaltung betriebenen Mobilfunkendgeräts eine galvanische Verbindung zwischen dem Koppelglied (5) und der Detektoreinheit (1) besteht.

3. Detektionsschaltung nach Anspruch 1 oder 2, **dadurch gekennzeichnet, dass** diese über ein in einem Sendezweig (2) der Zubehörschaltung zwischen einem Duplexer und dem beim Auftreten eines Sendesignals aktiv zu schaltenden Sendeleistungsverstärker (3) angeordnetes Schaltmittel (4) und über das dem Sendeleistungsverstärker (3) nachgeschaltete Koppelglied (5) in die Zubehörschaltung einbezogen ist.

4. Detektionsschaltung nach einem der Ansprüche 1 bis 3, **dadurch gekennzeichnet, dass** deren Selbsthaltefunktion mittels eines Zeitglieds (8) realisiert ist, so dass die aufgrund der nach der Detektion des Sendesignals erfolgenden Umschaltung des Schaltmittels (4) am Eingang der Detektoreinheit (1) eintretende Abwesenheit des Sendesignals von der Detektoreinheit (1) erst verzögert erkannt wird, wobei dann bereits der über das Koppelglied (5) ausgekoppelte Anteil des verstärkten Sendesignals an der Detektoreinheit (1) ansteht.

5. Detektionsschaltung nach Anspruch 4, **dadurch gekennzeichnet, dass** das Zeitglied als ein integraler Bestandteil der Detektoreinheit (1) ausgebildet ist.

6. Detektionsschaltung nach einem der Ansprüche 1 bis 5, **dadurch gekennzeichnet, dass** deren Detektoreinheit (1) als ein Feldstärkemesser mit Schwellwertfunktion ausgebildet ist.

7. Detektionsschaltung nach einem der Ansprüche 1 bis 6, dass diese ein Stellglied (7) aufweist, mittels welchem eine Hysterese einstellbar ist, so dass von der Detektoreinheit (1) die Abwesenheit eines Sendesignals erkannt wird, sofern die an der Detektoreinheit (1) anstehende Sendeleistung mindestens um einen durch die Hysterese bestimmten Wert geringer ist, als die mit dem Beginn des Sendeburst an der Detektoreinheit (1) anstehende Sendeleistung.

8. Detektionsschaltung nach Anspruch 7, **dadurch gekennzeichnet, dass** mittels des Stellglieds (7) eine Hysterese von 3 dB eingestellt ist.

9. Verfahren zum Betreiben einer Zubehörschaltung, nämlich einer Schaltungsanordnung zur Verarbeitung oder Beeinflussung von einem Mobilfunkendgerät empfangener oder ausgesendeter Mobilfunksignale, wobei eine Detektoreinheit (1) einer Detektionsschaltung die Zubehörschaltung veranlasst, unterschiedliche Betriebszustände einzunehmen, indem durch die Detektoreinheit (1) im Falle der Detektion eines Sendesignals des Mobilfunkendgeräts ein Schaltungsteil der Zubehörschaltung aktiv geschaltet wird, in welchem zumindest ein der Verstärkung des Sendesignals dienen der, in Abwesenheit eines Sendesignals des Mobilfunkendgeräts inaktiv geschalteter Sendeleistungsverstärker (3) angeordnet ist,
**dadurch gekennzeichnet,**
**dass** ein von dem Mobilfunkendgerät ausgesendetes Sendesignal zu Beginn eines Sendeburst zunächst nicht am Sendeleistungsverstärker (3), sondern über ein Schaltmittel (4) an der Detektoreinheit (1) anliegt, wobei jedoch die Detektoreinheit (1) das von ihr detektierte Sendesignal durch Betätigung des Schaltmittels (4) unmittelbar auf den Sendeleistungsverstärker (3) umschaltet, und dass die Detektionsschaltung die Detektoreinheit (1) derart betreibt, dass die Zubehörschaltung in ihrem für die Anwesenheit eines Sendesignals vorgesehenen Betriebszustand auch nach dem Umschalten des Schaltmittels (4) zumindest so lange belassen wird, bis der Sendeleistungsverstärker (3) durchgeschaltet hat und der mittels eines ihm nachgeschalteten Koppelglieds (5) ausgekoppelte Anteil des verstärkten Sendesignals an der Detektoreinheit (1) anliegt.

## Claims

1. A detection circuit, namely a circuit arrangement having a detector unit (1) for detecting a transmitted signal of a mobile radio terminal which is operated using an accessory circuit, namely a circuit arrangement for processing or influencing mobile radio signal received or transmitted by the mobile radio terminal, wherein the detection circuit is in the form of part of the aforementioned accessory circuit and wherein the accessory circuit, when prompted by the detector unit (1) of the detection circuit, adopts various operating states by virtue of the detector unit (1), upon detecting a transmitted signal of the mobile radio terminal, activating a circuit portion of said accessory circuit which contains at least one transmission power amplifier (3) which is fused for amplifying the transmitted signal and which is deactivated in the absence of a transmitted signal of the mobile radio terminal, **characterized in that** the detector unit (1) of the detection circuit is included in the accessory circuit, via a switching means (4) which is arranged in a transmission path (2) of the accessory circuit, upstream of the at least one transmission power amplifier (3) that is to be activated upon detection of a transmitted signal from Lhe mobile radio terminal, and which is operated by the detector unit (1) and also via a coupling element (5) which is connected downstream of the transmission power amplifier (3), such that a transmitted signal transmitted by the mobile radio terminal is, at the start of the transmission burst, initially applied not to the transmission power amplifier (3) but rather via the switching means (4) to the detector unit (1), but wherein the detector unit (1) changes over the transmitted signal detected thereby directly to the transmission power amplifier (3) by operating the switching means (4), and **in that** the detection circuit has a self-holding function, so that the detector unit (1) leaves the accessory circuit in its operating state which is intended for the presence of a transmitted signal, even after the changeover of the switching means (4), at lease until the transmission power amplifier (3) hats turned on and the portion of the amplified transmitted signal which is output by means of the coupling element connected downstream of said transmission power amplifier is applied to the detector unit (1).

2. The detection circuit as claimed in claim 1, **characterized in that** the coupling element (5) and the detector unit (1) have a further switching means (6) arranged between them which is operated by the detector unit (1) such that there is a direct electrical connection between the coupling element (5) and the detector unit (1) only in the presence of a transmitted signal, detected by the detection circuit, from the mobile radio terminal operated using the accessory circuit.

3. The detection circuit as claimed in claim 1 or 2, **characterized in that** said circuit is included in the accessory circuit via a switching means (4) which is arranged in a transmission path (2) of the accessory circuit between a duplexer and the transmission power amplifier (3) that is to be activated when a transmitted signal occurs and via the coupling element (5) connected downstream of the transmission power amplifier (3).

4. The detection circuit as claimed in one of claims 1 to 3, **characterized in that** the self-holding function thereof is implemented by means of a timing element (8), so that the absence of the transmitted signal which occurs at the input of the detector unit (1) on account of the changeover of the switching means (4) following detection of the transmitted signal is recognized by the detector unit (1) only after a delay, in which case that portion of the amplified transmitted signal which is output via the coupling element (5) is already present on the detector unit (1).

5. The detection circuit as claimed in claim 4, **characterized in that** the timing element is in the form of an integral part of the detector unit (1).

6. The detection circuit as claimed in one of claims 1 to 5, **characterized in that** the detector unit (1) thereof is in the form of a field strength meter with a threshold value function.

7. The detection circuit as claimed in one of claims 1 to 6, **characterized in that** said circuit has an actuating element (7) which can be used to set a hysteresis, so that the detector unit (1) recognizes the absence of a transmitted signal if the transmission power which is present on the detector unit (1) is lower than the transmission power which is present on the detector unit (1) at the start of the transmission burst at least by a value which is determined by the hysteresis.

8. The detection circuit as claimed in claim 7, **characterized in that** the actuating element (7) has been used to set a hysteresis of 3 dB.

9. A method of operating an accessory circuit, namely a circuit arrangement for processing or influencing mobile radio signals received or transmitted by a mobile radio terminal, wherein a detector unit (1) of a detection circuit prompts the accessory circuit to adopt various operating states by virtue of the detector unit (1), upon detecting a transmitted signal of the mobile radio terminal, activating a circuit portion of said accessory circuit which contains at least one transmission power amplifier (3) which is used for amplifying the transmitted signal and which is deactivated in the absence of a transmitted signal of the mobile radio terminal,
**characterized in that**
a transmitted signal which is transmitted by the mobile radio terminal, at the start of a transmission burst, initially applied not to the transmission power amplifier (3) but rather via a switching means (4) to the detector unit (1), but wherein the detector unit (1) changes over the transmitted signal detected thereby directly to the transmission power amplifier (3) by operating the switching means (4), and **in that** the detection circuit operates the detection circuit (1), sc that the accessory circuit is kept in its operating state which is intended for the presence of a transmitted signal, even after the changeover of the switching means (4), at least until the transmission power amplifier (3) has turned on and the portion of the amplified transmitted signal which is output by means of a coupling clement (5) connected downstream of said transmission poser amplifier is applied to the detector unit (1).

## Revendications

1. Circuit de détection, plus précisément agencement de circuits ayant une unité détectrice (1) servant à détecter un signal d'émission d'un terminal de radiocommunication mobile, qui est exploité avec un circuit accessoire, plus précisément un agencement de circuits servant à traiter ou influencer des signaux de radiocommunication mobile reçus ou émis par le terminal de radiocommunication mobile, le circuit de détection étant formé en tant que partie dudit circuit accessoire et le circuit accessoire faisant en sorte que l'unité détectrice (1) du circuit de détection prenne des états de fonctionnement différents du fait que, en cas de détection d'un signal d'émission du terminal de radiocommunication mobile, l'unité détectrice (1) rend active une partie de commutation de ce circuit accessoire dans laquelle est disposé au moins un amplificateur de puissance d'émission (3) qui sert à l'amplification du signal d'émission et qui est rendu inactif en absence d'un signal d'émission du terminal de radiocommunication mobile, **caractérisé en ce que** l'unité détectrice (1) du circuit de détection est intégrée dans le circuit accessoire par le biais d'un moyen de commutation (4) disposé dans une branche d'émission (2) du circuit accessoire, avant le ou les amplificateurs de puissance d'émission (3) à rendre actifs lors de la détection d'un signal d'émission du terminal de radiocommunication mobile et actionné par l'unité détectrice (1) ainsi que par le biais d'un élément de couplage (5) monté en aval de l'amplificateur de puissance d'émission (3) de sorte qu'un signal d'émission, émis par le terminal de radiocommunication mobile, au début de la rafale d'émission, ne soit pas tout d'abord appliqué à l'amplificateur de puissance d'émission (3), mais au contraire à l'unité détectrice (1) par le biais du moyen de commutation (4), l'unité détectrice (1) commutant toutefois directement le signal d'émission, qu'elle a détecté, sur l'amplificateur de puissance d'émission (3) en actionnant le moyen de commutation (4) et **en ce que** le circuit de détection comporte une fonction d'arrêt automatique de sorte que l'unité détectrice (1) laisse le circuit accessoire dans son état de fonctionnement prévu pour la présence d'un signal d'émission également après la commutation du moyen de commutation (4) au moins jusqu'à ce que l'amplificateur de puissance d'émission (3) soit activé et que la partie du signal d'émission amplifié, découplée au moyen de l'élément de couplage monté en aval de l'amplificateur, soit appliquée à l'unité détectrice (1).

2. Circuit de détection selon la revendication 1, **caractérisé en ce qu'**entre l'élément de couplage (5) et l'unité détectrice (1) est disposé un autre moyen de commutation (6) qui est actionné par l'unité détectrice (1) d'une manière telle qu'il existe une liaison galvanique entre l'élément de couplage (5) et l'unité détectrice (1) uniquement en absence d'un signal d'émission, détecté par le circuit de détection, du terminal de radiocommunication mobile exploité avec le circuit accessoire.

3. Circuit de détection selon la revendication 1 ou 2, **caractérisé en ce que** celui-ci est intégré dans le circuit accessoire par le biais d'un moyen de commutation (4) disposé dans une branche d'émission (2) du circuit accessoire entre un duplexeur et l'amplificateur de puissance d'émission (3) à rendre actif en cas d'apparition d'un signal d'émission et par le biais de l'élément de couplage (5) monté en aval de l'amplificateur de puissance d'émission (3).

4. Circuit de détection selon l'une des revendications 1 à 3, **caractérisé en ce que** sa fonction d'arrêt automatique est réalisée au moyen d'un élément de temporisation (8) de sorte que l'unité détectrice (1) détecte seulement après un certain retard l'absence du signal d'émission apparaissant à l'entrée de l'unité détectrice (1) en raison de la commutation du moyen de commutation (4) ayant lieu après la détection du signal d'émission, la partie découplée, par le biais de l'élément de couplage (5), du signal d'émission amplifié étant déjà présente dans l'unité détectrice (1).

5. Circuit de détection selon la revendication 4, **caractérisé en ce que** l'élément de temporisation est formé en tant que partie intégrante de l'unité détectrice (1).

6. Circuit de détection selon l'une quelconque des revendications 1 à 5, **caractérisé en ce que** son unité détectrice (1) est formée en tant que dispositif de mesure d'intensité de champ avec une fonction de valeur de seuil.

7. Circuit de détection selon l'une quelconque des revendications 1 à 6, **caractérisé en ce qu'**il comporte un élément de réglage (7) qui permet de régler un hystérésis de sorte que l'absence d'un signal d'émission soit détectée par l'unité détectrice (1) dans la mesure où la puissance d'émission présente sur l'unité détectrice (1) est plus petite d'au moins une valeur déterminée par l'hystérésis que la puissance d'émission présente sur l'unité détectrice (1) au début de la rafale d'émission.

8. Circuit de détection selon la revendication 7, **caractérisé en ce qu'**un hystérésis de 3 dB est réglé au moyen de l'élément de réglage (7).

9. Procédé de fonctionnement d'un circuit accessoire, plus précisément d'un agencement de circuits servant à traiter ou influencer des signaux de radiocommunication mobile reçus ou émis par un terminal de radiocommunication mobile, une unité détectrice (1) d'un circuit de détection faisant en sorte que le circuit accessoire prenne différents états de fonctionnement du fait que, en cas de détection d'un signal d'émission du terminal de radiocommunication mobile, l'unité détectrice (1) rend active une partie de commutation du circuit accessoire dans laquelle est disposé au moins amplificateur de puissance d'émission (3) qui sert à l'amplification du signal d'émission et qui est rendu inactif en absence d'un signal d'émission du terminal de radiocommunication mobile,
**caractérisé en ce**
**qu'**un signal d'émission émis par le terminal de radiocommunication mobile au début d'une rafale d'émission n'est pas appliqué tout d'abord à l'amplificateur de puissance d'émission (3), mais au contraire à l'unité détectrice (1) par le biais d'un moyen de commutation (4), l'unité détectrice (1) commutant toutefois le signal d'émission qu'elle a détecté par l'actionnement du moyen de commutation (4) directement sur l'amplificateur de puissance d'émission (3), et en ce que le circuit de détection exploite l'unité détectrice (1) de manière telle que le circuit accessoire soit laissé dans son état de fonctionnement prévu pour la présence d'un signal d'émission également après la commutation du moyen de commutation (4) au moins jusqu'à ce que l'amplificateur de puissance d'émission (3) soit activé et que la partie du signal d'émission amplifié, découplée au moyen de l'élément de couplage (5) monté en aval de l'amplificateur, soit présente sur l'unité détectrice (1).
